# FASCICULE DE BREVET EUROPEEN

(11) **EP 1 360 251 B1**
(45) Date de publication et mention de la délivrance du brevet: **24.02.2010**
(21) Numéro de dépôt: 01991874.7
(22) Date de dépôt: 21.12.2001
(51) Int. Cl.: C09D 175/04, C08J 7/04, C08K 3/08, B60C 1/00, C08K 3/00

(54) **PNEUMATIQUE AYANT UNE COMPOSITION COLOREE METALISEE DE SURFACE**
REIFEN MIT EINER GEFÄRBTEN, METALLISIERTEN OBERFLÄCHENZUSAMMENSETZUNG
TYRE WITH COLOURED, METALLISED SURFACE COMPOSITION

(30) Priorité: 29.12.2000 FR 0017347
(43) Date de publication de la demande: 12.11.2003
(73) Titulaire: Société de Technologie Michelin, 63040 Clermont-Ferrand Cedex 09 (FR); Michelin Recherche et Technique S.A., 1763 Granges-Paccot (CH)
(72) Inventeur: COTTIN, Alain, F-63000 Clermont-Ferrand (FR); PEYRON, Georges, F-63200 Riom (FR)
(74) Mandataire: Le Cam, Véronique Marie Christine
(86) Numéro de dépôt international: PCT/EP2001/015187
(87) Numéro de publication internationale: WO 2002/053661

(56) Documents cités:
- US-A- 4 158 378
- US-A- 5 417 515
- DATABASE WPI Section Ch, Week 199528 Derwent Publications Ltd., London, GB; Class A25, AN 1995-213071 XP002176861 & JP 07 126431 A (KOUEN SHISETSU KAIHATSU GIGYO KYODO KUMI), 16 mai 1995 (1995-05-16)

## Description

La présente invention concerne des compositions de couleur métallisée destinées à être utilisées pour la fabrication d'enveloppes de pneumatiques, et plus particulièrement destinées à constituer au moins une partie de la surface extérieure d'enveloppes de pneumatiques.

Dans ce qui suit le terme « coloré » est entendu comme excluant la couleur noire, c'est-à-dire toutes les autres couleurs y compris le blanc, et le terme « couleur métallisée » comme incluant toutes les nuances métallisées claires ou foncées de toute couleur autre que le noir.

Ces compositions sont ainsi destinées à recouvrir au moins partiellement la surface d'enveloppes de pneumatiques quelle que soit la nature et la composition des mélanges caoutchouteux sur lesquels elles devront être déposées. Bien entendu, dans la mesure où il ne s'agit que d'une couverture de surface, ces compositions sont plus particulièrement destinées à recouvrir des surfaces d'enveloppes de pneumatiques dites « non-usantes » c'est-à-dire qui ne sont pas au contact de la route dans des conditions normales d'utilisation desdits pneumatiques. Ainsi, de telles compositions colorées ayant des fins notamment décoratives et de marquage, pourront constituer au moins partiellement la surface extérieure d'un flanc d'enveloppe de pneumatique ou des fonds de sculptures de la bande de roulement.

Comme on le sait, les vulcanisats de caoutchoucs diéniques naturels comme synthétiques, en raison de la présence de doubles liaisons sur leurs chaînes moléculaires, sont susceptibles de se détériorer plus ou moins rapidement après une exposition prolongée à l'atmosphère, s'ils ne sont pas protégés, en raison de mécanismes connus d'oxydation et d'ozonolyse. De tels mécanismes ont été décrits par exemple dans les documents suivants: FR-A-1 358 702 ; FR-A-1 508 861 ou US-A-3 419 639 ; FR-A-2 553 782 ; réf. [1]: "Antidegradants for tire applications" in "Tire compounding", Education Symposium No 37 (ACS), Cleveland, Communication I, Octobre 1995 ; réf. [2]: "Non-blooming high performance antidegradants", Kaut. Gummi Kunst., 47, No 4, 1994, 248-255 ; réf. [3]: *"*Antioxidants" in Encycl. Polym. Sci. and Eng., 2nd Edition, Vol. 2, 73-91 ; réf. [4]: *"*Protection of rubber against ozone", RCT (Rubber Chem. Technol.) Vol 63, No 3, 1990, 426-450). Ces mécanismes complexes entraînent, suite à des ruptures des doubles liaisons et à l'oxydation des ponts de soufre, différents types de dégradation : l'oxydation se traduit par une rigidification et une fragilisation des vulcanisats, alors que l'attaque de l'ozone a pour conséquence l'amorce de craquelures ou fissures de surface qui vont se creuser et se propager plus ou moins vite en fonction de la nature et de la sévérité des contraintes statiques ou dynamiques imposées à ces vulcanisats lors de leur utilisation. Les mécanismes de dégradation ci-dessus sont en outre accélérés sous l'action conjuguée de la chaleur par thermo-oxydation, ou encore de celle de la lumière par photo-oxydation (voir par ex. réf. [5]: *"*Photo-oxydation and stabilisation of polymers", Trends in Polym. Sci., Vol. 4, No 3, 1996, 92-98 ; ou réf. [6]: *"*Degradation mechanisms of rubbers", Int. Polym. Sci. and Technol., Vol 22, No 12, 1995, 47-57).

Tous les phénomènes de vieillissement ci-dessus ont pu être peu à peu inhibés grâce à la mise au point et commercialisation de divers agents antidégradants, antioxydants ou antiozonants. On a même trouvé des composés pouvant remplir simultanément ces deux fonctions ; les plus efficaces, à la fois comme antioxydants et antiozonants, sont de manière connue des dérivés de la quinoléine, comme par exemple la 2,2,4-triméthyl-1,2-dihydroquinoléine ("TMQ"), ou des dérivés de la p-phénylènediamine ("PPD") encore plus actifs que les premiers, tels que par exemple la N-1,3-diméthylbutyl-N'-phényl-p-phénylènediamine ("6-PPD") ou la N-isopropyl-N'-phényl-p-phénylènediamine ("I-PPD"). Ces antidégradants type TMQ et PPD, parfois même associés, sont aujourd'hui très répandus et utilisés de manière quasi-systématique (voir par ex. réf. [1], [2] et [4] supra) dans les compositions de caoutchouc conventionnelles chargées au moins en partie de noir de carbone leur donnant leur couleur noire caractéristique.

Or les agents cités ci-dessus, et en particulier les dérivés TMQ ou PPD, ne sont pas stables à la lumière et, sous l'effet du rayonnement U.V., génèrent des espèces chimiques colorées qui provoquent une altération de couleur des compositions de caoutchouc les tachant en brun sombre. Il est clair que cette caractéristique exclut l'utilisation de tels agents au sein de compositions blanches, claires ou colorées, mais elle pose également des problèmes d'utilisation de compositions blanches, claires ou colorées au contact de compositions contenant ces agents antioxydants qui vont en effet, si rien n'est prévu pour les en empêcher, naturellement migrer dans et à la surface des compositions blanches, claires ou colorées et les tacher.

De plus, pour limiter la dégradation due à l'ozone, les compositions élastomériques incorporent également couramment des cires qui apportent un complément de protection, par rapport aux agents anti-ozonants, en statique par la formation d'un revêtement protecteur en surface. Cependant les cires qui se caractérisent également par leur aptitude à migrer jusqu'à la surface des articles, modifient l'aspect extérieur des surfaces des compositions élastomères en les tâchant ou en les rendant ternes. On appelle ce phénomène 1'" efflorescence " des cires.

C'est pourquoi, il est fort complexe de mettre au point des compositions colorées destinées à recouvrir une partie de la surface extérieure d'enveloppes de pneumatiques et à résister au tachage dû aux agents antioxydants, anti-ozonants et aux cires présents dans les autres compositions utilisées dans les enveloppes de pneumatiques.

La plupart des solutions proposées reposent sur l'utilisation de compositions colorées à base de caoutchouc utilisant des constituants susceptibles d'être introduits dans de telles compositions et possédant des propriétés d'imperméabilité. Or dans le domaine du pneumatique, il est connu de faire appel aux propriétés d'imperméabilité du caoutchouc butyle. Cependant l'utilisation du caoutchouc butyle pose de nombreux problèmes.

Ainsi, par exemple, la publication CA-2 228 692 décrit une composition de flancs blancs utilisant, afin de constituer une barrière pour les agents antioxydants tachants, une base élastomérique majoritairement constituée de caoutchoucs butyle. Mais, il est connu que de fortes proportions de caoutchouc butyle dans des compositions créent des problèmes d'adhésion de ces dernières aux autres compositions présentes dans le pneumatique. C'est pourquoi, l'interface obtenue entre les flancs blancs et les autres mélanges présents dans le pneumatique étant fragile, de telles compositions pour flancs blancs ne peuvent être déposées que sur des parties très limitées du flanc qui ne sont pas sollicitées afin d'éviter des décollements d'interfaces.

D'autres solutions consistent à réaliser des compositions destinées à être utilisées en masse et non plus seulement en surface, et à renoncer à la présence des agents antioxydants à base des dérivés PPD ou TMQ au sein de ces compositions mais ceux-ci étant très efficaces, leur remplacement nécessite la mise en place de systèmes de protection complexes comme des exemples sont décrits dans la publication WO 99/02590. Notons, de plus, qu'il n'est généralement pas envisageable de remplacer dans toutes les compositions présentes dans le pneumatique les agents antioxydants à base des dérivés PPD ou TMQ qui restent très performants, ce qui du fait de leur migration nécessite de prévoir également une solution telle que celle utilisant du caoutchouc butyle dont on a déjà évoqué les inconvénients.

L'invention vise à pallier l'ensemble de ces inconvénients avec une nouvelle composition colorée.

La demanderesse a découvert de façon surprenante que certains polyuréthanes peuvent constituer la base d'une telle composition colorée. Cette composition peut avantageusement être déposé sur le pneumatique vulcanisé après un traitement de la surface concernée, ce qui permet au polyuréthane d'adhérer de façon satisfaisante à la surface du pneumatique et ainsi, notamment, de ne pas avoir de limitation en terme d'épaisseur de la couche réalisée.

Selon l'invention, le pneumatique possède une partie au moins de sa surface caoutchouteuse extérieure à base d'élastomères diéniques essentiellement insaturés recouverte d'un revêtement coloré, ce revêtement comprenant au moins une couche au contact de l'air d'une composition comprenant à titre majoritaire du polyuréthane réalisée à partir d'un polyol choisi parmi les polyéthers ou polyesters aliphatiques et les polyéthers ou polyesters dont la chaîne principale est semi-aromatique, et comportant des écailles d'aluminium avec un taux compris entre 20 et 150 parties d'écailles pour cent parties de polyuréthane sec, pce, la liaison entre l'élastomère et le polyuréthane étant réalisée grâce aux fonctions polaires. Ces fonctions polaires situées à la surface de l'élastomère sont encore plus efficaces lorsqu'elles possèdent au moins un hydrogène mobile capable de réagir avec la composition pour former des liaisons covalentes.

Avantageusement, le polyuréthane possède une température de transition vitreuse inférieure ou égale à -20°C et un allongement à la rupture supérieur ou égal à 100%.

La température de transition vitreuse d'un polymère est la température où le comportement mécanique du polymère évolue d'un comportement vitreux, rigide et cassant à un comportement caoutchouteux.

Cette couche permet, ainsi, de former un revêtement coloré continu, souple et adhérant sur la surface du pneumatique. Le comportement caoutchouteux du revêtement obtenu permet de résister à toutes les déformations subies après la fabrication des pneumatiques et en particulier lors de leur gonflage et dans leur utilisation ultérieure.

Ce revêtement s'oppose par sa présence aux dégradations dues aux oxydations et à l'ozone et limite très fortement la migration des antioxydants vers la surface, ce qui permet de conserver sa couleur et, de plus, il empêche les migrations des cires vers la surface par effet barrière en évitant ainsi leur efflorescence, ce qui lui permet de conserver son aspect de surface.

De préférence, le taux d'écailles d'aluminium sera compris entre 40 et 100 pce.

D'autres caractéristiques et avantages de l'invention apparaîtront à la lecture d'un exemple de réalisation d'un pneumatique conforme à l'invention et du procédé de mise en oeuvre.

Le procédé vise à déposer un revêtement coloré sur la surface extérieure d'un pneumatique, la composition de cette surface étant à base d'élastomères diéniques essentiellement insaturés.

Par élastomère ou caoutchouc "diénique", on entend de manière connue un élastomère issu au moins en partie (i.e. un homopolymère ou un copolymère) de monomères diènes (monomères porteurs de deux doubles liaisons carbone-carbone, conjuguées ou non).

De manière générale, on entend ici par élastomère diénique "essentiellement insaturé" un élastomère diénique issu au moins en partie de monomères diènes conjugués, ayant un taux de motifs ou unités d'origine diénique (diènes conjugués) qui est supérieur à 15% (% en moles).

C'est ainsi, par exemple, que des élastomères diéniques tels que les caoutchoucs butyle ou les copolymères de diènes et d'alpha-oléfines type EPDM (terpolymère éthylène-propylène-diène) n'entrent pas dans la définition précédente et peuvent être notamment qualifiés d'élastomères diéniques "essentiellement saturés" (taux de motifs d'origine diénique faible ou très faible, toujours inférieur à 15%).

Le procédé consiste dans un premier temps à traiter la surface extérieure à protéger du pneumatique vulcanisé avec une solution contenant un agent de fonctionnalisation afin de fonctionnaliser les élastomères diéniques et de permettre ensuite le collage d'une composition à base de polyuréthane conforme à l'invention. Le pneumatique peut être indifféremment monté et gonflé préalablement à ces opérations ou non.

L'agent de fonctionnalisation est choisi préférentiellement parmi le groupe constitué par les hypochlorites alcalins ou alcalino-terreux additionnés à de l'acide chlorhydrique, en particulier les hypochlorites de sodium, de potassium ou de calcium, et par l'acide trichloroisocyanurique, TIC, qui permettent de réaliser une chloration et une oxydation à la surface du mélange caoutchouteux.

Les agents de fonctionnalisation sont en solution dans un solvant tel que l'eau pour les hypochlorites et dans un solvant organique tel que l'acétate d'éthyle pour l'acide trichloroisocyanurique dans une concentration allant de 1 à 5% en poids, qui présentent tous deux l'avantage de s'évaporer ensuite aisément.

Ce traitement permet de rendre polaire et fonctionnaliser la surface caoutchouteuse de façon à permettre une très bonne adhésion de la couche de polyuréthane et à permettre la formation de liaisons covalentes entre le polyuréthane et les élastomères diéniques essentiellement insaturés du mélange caoutchouteux grâce aux fonctions polaires créées. Le TIC permet également d'améliorer le mouillage ce qui favorise encore l'adhésion de la couche de polyuréthane.

On peut ainsi déposer une telle solution à température ambiante, l'application pouvant se faire par tous les moyens connus et notamment au pinceau, au rouleau ou par pulvérisation au pistolet.

On laisse alors sécher la solution de 10 à 30 minutes afin d'une part que la réaction chimique avec la surface caoutchouteuse puisse avoir lieu et, d'autre part, que le solvant s'évapore. Pour accélérer cette opération on peut procéder à un chauffage de la surface du pneumatique, cependant il faut veiller à ce que celle-ci ne dépasse pas 60°C afin d'éviter que les fonctions polaires formées à la surface ne migrent vers l'intérieur du mélange caoutchouteux et ne soient alors plus accessibles ni disponibles afin d'opérer des liaisons avec le polyuréthane.

On applique alors sur la surface ainsi traitée une couche mince d'une composition à base de polyuréthane par tout moyen approprié comme pour le traitement précédent.

Cette composition à base d'une dispersion aqueuse de polyuréthane comporte des écailles d'aluminium avec un taux compris entre 10 et 150 parties pour cent parties de polyuréthane sec, que l'on notera « pce » par analogie aux unités utilisées dans les compositions élastomériques.

En effet l'aluminium est connu pour son effet barrière par rapport particulièrement à l'oxygène et au gaz carbonique et une quantité minimale est nécessaire pour obtenir une coloration métallique correcte de la composition comme on le verra plus précisément dans les exemples qui suivent.

L'aluminium peut être utilisé seul ou en coupage avec d'autres charges choisies notamment parmi le dioxyde de titane, le monoxyde de zinc, le sulfate de baryum et les carbonates de calcium.

En jouant sur le taux d'écailles d'aluminium et l'association éventuelle avec d'autres charges, on peut faire varier la nuance de gris métallisée désirée.

Par contre, l'ajout d'agents colorants ne permettait pas de modifier sensiblement la couleur grise de l'aluminium. Cependant, on a constaté de manière surprenante que la présence d'écailles de mica avec une teneur supérieure ou égale à 25% de la teneur en écailles d'aluminium, et préférentiellement supérieure ou égale à 50%, la teneur en écailles d'aluminium restant majoritaire par rapport à celle en écailles de mica, permet d'obtenir des couleurs métallisées distinctes du gris. De plus, en présence de ces écailles de mica traitées ou non traitées, les agents colorants deviennent à nouveau efficaces.

On peut également prévoir la présence de charge renforçante telle que de la silice pour conférer d'autres types de propriétés aux compositions conformes à l'invention, en tenant compte, bien entendu, de la couleur de cette charge qui peut modifier ou nuire à la coloration souhaitée de la composition.

Par ailleurs, le polyuréthane utilisé dans la dispersion est réalisé à partir d'un polyol choisi parmi les polyéthers ou polyesters aliphatiques et les polyéthers ou polyesters dont la chaîne principale est semi-aromatique, ce qui assure au revêtement son insensibilité à l'ozone, ce polyuréthane possédant, de plus, une température de transition vitreuse inférieure ou égale à -20°C et un allongement à la rupture supérieur ou égal à 100% afin d'avoir un comportement caoutchouteux et une élasticité cohérente avec ceux du pneumatique pour résister aux sollicitations subies par ce dernier.

On choisit d'ailleurs de préférence un polyuréthane possédant un allongement à la rupture supérieur à 200%.

Parmi les polyuréthanes conformes à l'invention, on peut citer les polyuréthanes obtenus à partir :
- de polyol de masse moléculaire comprise entre 500 et 4000 g à base d'un polyester tel qu'un polyéthylène adipate, un polycarbonate, un polycaprolactone ou à base d'un polyéther tel qu'un polypropylèneglycol, un polytétraméthylèneglycol ou un polyhexaméthylèneglycol,
- d'un polyisocyanate de fonctionnalité 2 tel que le toluène diisocyanate (TDI), le diphényle méthane diisocyanate (MDI), le dicyclohexyl méthane diisocyanate, le cyclohexyl diisocyanate ou l'isophorone diisocyanate, ou de fonctionnalité 3 tel qu'un triisocyanate obtenu par trimérisation d'un des diisocyanates cités ci-dessus ou de fonctionnalité comprise entre 2 et 3 tel qu'un polyisocyanate liquide dérivé du MDI ;
- et éventuellement d'un allongeur tel qu'une diamine ou un diol dissout dans la phase aqueuse de la dispersion de polyuréthane.

Parmi les polyuréthanes cités ci-dessus, certains possèdent des groupes isocyanates libres qui permettent généralement de réaliser une liaison avec une surface polaire possédant des hydrogènes mobiles (réactifs), et d'autres pas tels que les polyuréthanes autoréticulables par formation d'azométhine ou par auto-oxydation tels qu'ils sont notamment décrits dans la communication " New polymer synthesis for (self)crosslinkable urethanes and urethanes/acrylics " présentée par Ad. OVERBEEK EUROCOAT 97 à Lyon Eurexpo, 23-25 sept. 97.

On constate, de façon étonnante, que la seule présence des fonctions polaires chlorées ou oxydées est suffisante pour permettre l'adhésion du polyuréthane même sans isocyanate libre et son maintien malgré les sollicitations et les contraintes subies par le pneumatique comme le montreront les exemples cités plus loin dans la description. Or, il est intéressant de pouvoir utiliser de tels polyuréthanes, les groupes isocyanates libres nuisant à la stabilité du polyuréthane dans l'eau. On peut néanmoins faire appel à des polyuréthanes contenant des groupes isocyanates libres si ces derniers sont protégés au coeur des particules de la dispersion aqueuse. On peut noter que des revêtements tels que décrit dans la demande EP-0 728 810 de l'art antérieur, ne réagissent pas avec des fonctions polaires et ainsi qu'un tel traitement de surface est sans intérêt pour de telles compositions.

La composition comprend également au moins un épaississant qui peut être un polyuréthane associatif dans une proportion variant de 0,5 à 5 pce. La quantité de polyuréthane associatif nécessaire dépend de la viscosité obtenue quand on a en présence le mélange eau + polyuréthane +charge, la viscosité étant elle-même fonction de l'outil choisi pour déposer la composition (pistolet, raclette, pinceau etc...).

Bien entendu, on peut également ajouter dans la composition des éléments antibactérien, stabilisant, fongicide etc...

La concentration de polyuréthane dans la dispersion aqueuse de polyuréthane est préférentiellement comprise entre 10 et 50 % en fonction de la localisation de la surface du pneumatique à protéger, en effet en dessous de 10% la concentration est trop faible pour obtenir les effets escomptés et au-delà de 50% la dispersion devient très visqueuse et difficile à appliquer.

Le choix de la concentration dépend de la nécessité ou non pour la surface à protéger d'une épaisseur finale importante de revêtement auquel cas on choisira de préférence la concentration la plus élevée pour diminuer le nombre de couches à appliquer et inversement.

On laisse alors sécher ladite couche jusqu'à ce que le polyuréthane ait complètement réagi avec les fonctions réactives en surface du mélange caoutchouteux afin d'adhérer sur la surface traitée et que l'eau se soit totalement évaporée formant ainsi le revêtement coloré. A température ambiante, le temps de séchage est de l'ordre de l'heure, temps que l'on peut comme précédemment réduire à quelques minutes en opérant un chauffage, par exemple en réalisant une circulation d'air chaud, qui respecte un maintien d'une température en surface du pneumatique inférieure à 60°.

En fonction de l'outil permettant la dépose de la composition, on peut faire varier l'épaisseur du revêtement formé après le séchage de ladite composition. De bons résultats sont obtenus avec des revêtements secs d'une épaisseur supérieure ou égale à 5 µm.

Cependant l'épaisseur souhaitée va varier en fonction de la surface où le revêtement est appliqué. Une épaisseur de 5 µm à 50µm, par exemple, peut être suffisante sur les flancs de pneumatique et on peut avoir besoin d'une épaisseur plus importante, par exemple de 100 µm à 500 µm, pour les fonds de sillon des sculptures de la bande de roulement des pneumatiques ou dans les zones où l'on recherche un effet protecteur du revêtement vis-à-vis de l'atmosphère.

Bien entendu, le revêtement coloré ne peut pas résister efficacement aux différentes agressions sur les parties du pneumatique en contact permanent avec le sol.

L'invention est illustrée à titre non limitatif par les exemples qui suivent mais qui ne sauraient constituer une limitation de la portée de l'invention.

### Exemples

Dans ces exemples, les propriétés des compositions sont évaluées comme indiqué ci-après.

### -Propriétés colorimétriques

Les valeurs colorimétriques sont déterminées à l'aide d'un spectrocolorimètre SPECTRO-PEN du Dr LANGE en configuration D65/10 (lumière du jour; angle d'observation 10°). Les propriétés colorimétriques sont mesurées de manière connue, selon le manuel d'instruction du colorimètre, par analyse du spectre de réflectance des éprouvettes.

Ces mesures sont reportées dans le système " CIE LAB " des 3 coordonnées tridimensionnelles colorimétriques L*, a*, b* (avec une incertitude de 0, 1), système dans lequel :
- l'axe a* représente la coordonnée de chromaticité vert-rouge, avec une échelle allant de -100 (vert) à +100 (rouge);
- l'axe b* représente la coordonnée de chromaticité bleu-jaune, avec une échelle allant de -100 (bleu) à +100 (jaune);
   -- l'axe L* représente la coordonnée de luminosité, avec une échelle allant du 0 (noir) à 100 (blanc);
- ΔE = [(ΔL*)² + (Δa*)² + (Δb*)²] ^{1/2} représente l'écart colorimétrique global moyen de chaque échantillon par rapport à un témoin non vieilli; plus ΔE est élevé, plus la couleur de la composition a évolué.

Il est clair qu'il faudra tenir compte, lorsque l'on mesure a*, b*, L*, de leur variation relative les unes par rapport aux autres pour déterminer si la couleur du revêtement est restée dans la même gamme que la couleur initiale de ce dernier.

Lors des tests de colorimétrie, les éprouvettes utilisées sont des éprouvettes non normalisées consistant en des lanières de caoutchouc d'une composition A de référence de dimensions 150 x 150 mm sur laquelle trois bandes de revêtement de composition B à tester de largeur 25 mm espacées les unes des autres ont été déposées (après le dépôt d'une couche de TIC) à l'aide d'une raclette permettant l'obtention d'une épaisseur à sec de revêtement de 1 dixième de millimètre.

Ces éprouvettes sont laissées statiques exposées à l'air ambiant extérieur, pendant une période donnée, la face peinte comprenant les compositions à tester étant située à l'air libre.

A titre de composition de référence, qu'on nommera la composition A dans ce qui suit, on a choisi ici une composition support proche de celles utilisées dans les flancs de pneumatiques chargés au noir de carbone. Il est clair que ces exemples ne limitent en rien les résultats obtenus à la superposition de compositions conformes à l'invention sur ce type de compositions conventionnelles, sachant que la démonstration tient essentiellement à la présence des agents antioxydants dans ces compositions.

Ainsi la formulation de la composition A est la suivante, où toutes les parties sont exprimées en poids et l'élastomère est constitué par un coupage de caoutchouc naturel et de polybutadiène 35/65 :

| | | |
|---|---|---|
| Elastomère | : | 100 |
| Noir de carbone (N660) | : | 60 |
| Huile aromatique | : | 20 |
| Cire (a) | : | 1 |
| Oxyde de zinc | : | 3 |
| Acide stéarique | : | 1 |
| TMQ | : | 1 |
| 6-PPD | : | 3 |
| Sulfénamide (b) | : | 0,95 |
| Soufre | : | 1,6 |

| | | |
|---|---|---|
| (a) : cire antiozone (Redezon 500 de la société Repsol) (b) : sulfénamide : N-cyclohexyl-2-benzothiazyl sulfénamide. | | |

Les compositions B utilisées dans les exemples ont la composition de base suivante :
- Solution B :
   - une dispersion (à 35%) de polyuréthane réalisée à partir d'un polyester aliphatique présentant un taux d'élongation supérieur à 700 %, commercialisées par la société AVECIA sas, sous la dénomination NeoRez R-550,
   - polyuréthane associatif 1,5 pce de COATEX DV 202
- Solution TIC : Acide trichloroisocyanurique à 3% dans de l'acétate d'éthyle.

### Exemple 1

Cet exemple a pour but de montrer le maintien au cours du temps de la coloration d'un revêtement conforme à l'invention, réalisé à partir d'une composition B1.

La composition B1 est réalisée à partir de la formulation de base B dans laquelle ont été ajoutées des écailles d'aluminium (1) à un taux de 20 parties d'écailles pour cent parties de dispersion de polyuréthane soit environ 57 pce par rapport au polyuréthane sec.
(1) Ecailles d'aluminium commercialisées par la société SILENKA sous la dénomination Aluchrome Ultrafin Superpelliculant.

To étant la date de dépose du revêtement, les résultats sont indiqués dans le tableau I qui suit.

**Tableau I**

| Date | To | To + 30j | To+ 60j | To+ 90j | To +130j |
|---|---|---|---|---|---|
| L* | 68,1 | 68,8 | 68,0 | 70,6 | 70,1 |
| a* | -0,6 | -0,4 | -0,5 | 0,2 | -0,1 |
| b* | 0,8 | -1,2 | 1,4 | -2,5 | -1,6 |
| Aspect revêtement | Aucun tachage | Aucun tachage | Aucun tachage | Aucun tachage | Aucun tachage |

Les résultats montrent d'une part que le revêtement ne présente pas de taches même après 130 jours d'exposition, ce qui prouve que la composition du revêtement a effectivement permis de ralentir efficacement l'oxydation et l'attaque par l'ozone.

On constate, par ailleurs, étant donné l'incertitude sur les mesures de 0,1 que les trois grandeurs mesurées de chromaticité L* ,a* et b* sont restées quasiment constantes, ce qui signifie que la couleur n'a pas évoluée par rapport à la coloration initiale du revêtement.

## Revendications

1. Pneumatique dont une partie au moins de la surface caoutchouteuse extérieure à base d'élastomères diéniques essentiellement insaturés est recouverte d'un revêtement coloré, ce revêtement comprenant au moins une couche au contact de l'air d'une composition comprenant à titre majoritaire du polyuréthane réalisée à partir d'un polyol choisi parmi les polyéthers ou polyesters aliphatiques et les polyéthers ou polyesters dont la chaîne principale est semi-aromatique, et comportant des écailles d'aluminium avec un taux compris entre 20 et 150 parties d'écailles pour cent parties de polyuréthane sec, pce, la liaison entre l'élastomère et le polyuréthane étant réalisée grâce aux fonctions polaires.

2. Pneumatique selon la revendication 1, dans lequel le taux d'écailles d'aluminium est compris entre 40 et 100 pce.

3. Pneumatique selon l'une quelconque des revendications 1 ou 2, dans lequel les écailles d'aluminium sont utilisées en coupage avec des écailles de mica avec une teneur supérieure ou égale à 25% de la teneur en écailles d'aluminium, la teneur en écailles d'aluminium restant majoritaire par rapport à celle en écailles de mica.

4. Pneumatique selon la revendication 3, dans lequel le taux d'écailles de mica est supérieur ou égal à 50 % du taux d'écailles d'aluminium.

5. Pneumatique selon l'une quelconque des revendications 3 ou 4, dans lequel la composition comprend des agents colorants.

6. Pneumatique selon l'une quelconque des revendications 1 à 5, dans lequel le taux d'allongement à la rupture de la composition colorée à base de polyuréthane est supérieur ou égal à 250%.

7. Pneumatique selon la revendication 6, dans lequel le taux d'allongement à la rupture de la composition colorée à base de polyuréthane est compris entre 250% et 750%.

8. Pneumatique selon l'une quelconque des revendications 1 à 7, dans lequel le polyuréthane possède une température de transition vitreuse inférieure ou égale à -20°C et un allongement à la rupture supérieur ou égal à 100%.

9. Pneumatique selon la revendication 8, dans lequel l'allongement à la rupture du polyuréthane est supérieur à 200%.

10. Pneumatique selon l'une quelconque des revendications 1 à 9, dans lequel le polyuréthane est autoréticulable.

11. Pneumatique selon l'une quelconque des revendications 1 à 10, dans lequel les fonctions polaires sont des fonctions chlorées ou oxydées.

12. Pneumatique selon l'une quelconque des revendications 1 à 11, dans lequel l'aluminium est utilisé seul en tant que charge ou en coupage avec des charges blanches choisies parmi le dioxyde de titane, le monoxyde de zinc, le sulfate de baryum et les carbonates de calcium.

13. Pneumatique selon l'une quelconque des revendications 1 à 12, dans lequel la surface extérieure du pneumatique recouverte du revêtement est la surface extérieure de la bande de roulement.

14. Pneumatique selon l'une quelconque des revendications 1 à 13, dans lequel la surface extérieure du pneumatique recouverte du revêtement est la surface des fonds de sillons de sculpture de la bande de roulement.

15. Pneumatique selon l'une quelconque des revendications 1 à 14, dans lequel la surface extérieure du pneumatique recouverte du revêtement est la surface de l'un des flancs du pneumatique.

16. Procédé de revêtement d'un pneumatique selon l'une quelconque des revendications 1 à 15, dans lequel :
- on fait subir un traitement à la surface du pneumatique vulcanisé afin de rendre polaire et fonctionnaliser les élastomères de cette surface,
- on applique sur cette surface traitée au moins une couche constituée par une composition colorée à base de polyuréthane,
- et on laisse sécher cette couche jusqu'à la formation d'un revêtement coloré.

17. Procédé selon la revendication 16, dans lequel le traitement de surface du pneumatique consiste à déposer sur ladite surface un agent de fonctionnalisation choisi parmi l'acide trichloroisocyanurique ou les hypochlorites alcalins ou alcalino-terreux additionnés à de l'acide chlorhydrique.

18. Procédé selon l'une quelconque des revendications 16 ou 17, dans lequel la concentration de polyuréthane dans la composition colorée est comprise entre 10 et 50% en poids.

## Claims

1. A tyre, at least part of the outer rubber surface based on essentially unsaturated diene elastomers of which is covered with a coloured coating, this coating comprising at least one layer in contact with the air of a composition comprising in a majority proportion polyurethane produced from a polyol selected from among aliphatic polyethers or polyesters and polyethers or polyesters having a main chain which is semi-aromatic, and comprising flakes of aluminium in an, amount of between 20 and 150 parts of flakes per hundred parts of dry polyurethane, phr, the bond between the elastomer and the polyurethane being produced due to the polar functions.

2. A tyre according to Claim 1, in which the amount of flakes of aluminium is between 40 and 100 phr.

3. A tyre according to any one of Claims 1 or 2, in which the flakes of aluminium are used in a blend with flakes of mica having a content greater than or equal to 25% of the content of flakes of aluminium, the content of flakes of aluminium remaining a majority one relative to that of the flakes of mica.

4. A tyre according to Claim 3, in which the amount of flakes of mica is greater than or equal to 50% of the amount of flakes of aluminium.

5. A tyre according to any one of Claims 3 or 4, in which the composition comprises colourants.

6. A tyre according to any one of Claims 1 to 5, in which the amount of elongation at break of the coloured composition based on polyurethane is greater than or equal to 250%.

7. A tyre according to Claim 6, in which the amount of elongation at break of the coloured composition based on polyurethane is between 250% and 750%.

8. A tyre according to any one of Claims 1 to 7, in which the polyurethane has a glass transition temperature less than or equal to -20°C and an elongation at break greater than or equal to 100%.

9. A tyre according to Claim 8, in which the elongation at break of the polyurethane is greater than 200%.

10. A tyre according to any one of Claims 1 to 9, in which the polyurethane is self-crosslinkable.

11. A tyre according to any one of Claims 1 to 10, in which the polar functions are chlorinated or oxidised functions.

12. A tyre according to any one of Claims 1 to 11, in which the aluminium is used [as] sole filler or in a blend with white fillers selected from among titanium dioxide, zinc monoxide, barium sulphate and calcium carbonates.

13. A tyre according to any one of Claims 1 to 12, in which the outer surface of the tyre covered with the coating is the outer surface of the tread.

14. A tyre according to any one of Claims 1 to 13, in which the outer surface of the tyre covered with the coating is the surface of the bottoms of tread pattern grooves of the tread.

15. A tyre according to any one of Claims 1 to 14, in which the outer surface of the tyre covered with the coating is the surface of one of the sidewalls of the tyre.

16. A process for coating a tyre according to any one of Claims 1 to 15, in which:
- the surface of the vulcanised tyre is subjected to treatment in order to render the elastomers of this surface polar and to functionalise them,
- at least one layer formed or a coloured composition based on polyurethane is applied to this treated surface,
- and this layer is allowed to dry until a coloured coating forms.

17. A process according to Claim 16, in which the surface treatment of the tyre consists of depositing on said surface a functionalising agent selected from among trichloroisocyanuric acid or alkaline or alkaline-earth hypochlorites added to hydrochloric acid.

18. A process according to any one of Claims 16 or 17, in which the concentration of polyurethane in the coloured composition is between 10 and 50% by weight.

## Patentansprüche

1. Luftreifen, bei welchem mindestens ein Abschnitt der Gummiaußenfläche, die auf im Wesentlichen ungesättigten Dien-Elastomeren beruht, mit einer farbigen Beschichtung bedeckt ist, wobei diese Beschichtung mindestens eine Schicht umfasst, die mit der Luft in Kontakt ist und eine Zusammensetzung aufweist, die einen überwiegenden Anteil an Polyurethan umfasst und aus einem Polyol hergestellt ist, das aus den aliphatischen Polyethern oder Polyestern und den Polyethern oder Polyestern, deren Hauptkette halbaromatisch ist, gezählt ist und Aluminiumspäne aufweist, deren Anteil 20 bis 150 Teile an Spänen auf hundert Teile trockenes Polyurethan, phr, beträgt, wobei die Verbindung zwischen dem Elastomer und dem Polyurethan mittels der polaren Funktionen hergestellt wird.

2. Luftreifen nach Anspruch 1, wobei der Anteil an Aluminiumspänen 40 bis 100 phr beträgt.

3. Luftreifen nach einem beliebigen der Ansprüche 1 oder 2, wobei die Aluminiumspäne in Mischung mit Glimmerplättchen verwendet werden, deren Gehalt mindestens 25 % des Gehaltes an Aluminiumspänen beträgt, wobei der Gehalt an Aluminiumspänen jedoch gegenüber demjenigen an Glimmerplättchen überwiegend bleibt.

4. Luftreifen nach Anspruch 3, wobei der Anteil an Glimmerplättchen mindestens 50 % des Anteils an Aluminiumspänen beträgt.

5. Luftreifen nach einem beliebigen der Ansprüche 3 oder 4, wobei die Zusammensetzung Farbstoffe umfasst.

6. Luftreifen nach einem beliebigen der Ansprüche 1 bis 5, wobei die Reißdehnung der gefärbten Zusammensetzung auf Basis von Polyurethan mindestens 250 % beträgt.

7. Luftreifen nach Anspruch 6, wobei die Reißdehnung der gefärbten Zusammensetzung auf Basis von Polyurethan 250 bis 750 % beträgt.

8. Luftreifen nach einem beliebigen der Ansprüche 1 bis 7, wobei das Polyurethan eine Glasübergangstemperatur von höchstens -20 °C und eine Reißdehnung von mindestens 100 % aufweist.

9. Luftreifen nach Anspruch 8, wobei die Reißdehnung des Polyurethans mehr als 200 % beträgt.

10. Luftreifen nach einem beliebigen der Ansprüche 1 bis 9, wobei das Polyurethan selbstvernetzend ist.

11. Luftreifen nach einem beliebigen der Ansprüche 1 bis 10, wobei es sich bei den polaren Funktionen um chlorhaltige oder sauerstoffhaltige Funktionen handelt.

12. Luftreifen nach einem beliebigen der Ansprüche 1 bis 11, wobei das Aluminum als einziger Füllstoff oder in Mischung mit weißen Füllstoffen verwendet wird, welche aus Titandioxid, Zinkmonoxid, Bariumsulfat und Calciumcarbonaten ausgewählt sind.

13. Luftreifen nach einem beliebigen der Ansprüche 1 bis 12, wobei es sich bei der Außenfläche des Luftreifens, die mit der Beschichtung bedeckt ist, um die Außenfläche des Laufstreifens handelt.

14. Luftreifen nach einem beliebigen der Ansprüche 1 bis 13, wobei es sich bei der Außenfläche des Luftreifens, die mit der Beschichtung bedeckt ist, um die Bodenfläche der Profilrillen des Laufstreifens handelt.

15. Luftreifen nach einem beliebigen der Ansprüche 1 bis 14, wobei es sich bei der Außenfläche des Luftreifens, die mit der Beschichtung bedeckt ist, um eine der Seitenflächen des Luftreifens handelt.

16. Verfahren zur Beschichtung eines Luftreifens nach einem beliebigen der Ansprüche 1 bis 15, wobei:
- die Oberfläche des vulkanisierten Luftreifens einer Behandlung ausgesetzt wird, um den Elastomeren dieser Oberfläche eine polare Beschaffenheit und funktionelle Gruppen zu verleihen,
- auf diese behandelte Oberfläche mindestens eine Schicht aufgebracht wird, die aus einer gefärbten Zusammensetzung auf Basis von Polyurethan besteht,
- diese Schicht trocknen gelassen wird, bis sich eine gefärbte Beschichtung bildet.

17. Verfahren nach dem Anspruch 16, wobei die Oberflächenbehandlung des Luftreifens darin besteht, auf die Oberfläche ein Funktionalisierungsmittel aufzubringen, das aus Trichlorisocyanursäure oder Hypochloriten von Alkali- oder Erdalkalimetallen, welche Salzsäure zugesetzt werden, ausgewählt ist.

18. Verfahren nach einem beliebigen der Ansprüche 16 oder 17, wobei die Polyurethankonzentration in der gefärbten Zusammensetzung 10 bis 50 Gew.-% beträgt.
